# EUROPÄISCHE PATENTSCHRIFT

(11) **EP 0 786 186 B1**
(45) Veröffentlichungstag und Bekanntmachung des Hinweises auf die Patenterteilung: **19.09.2001**
(21) Anmeldenummer: 95935350.9
(22) Anmeldetag: 13.10.1995
(51) Int. Cl.: H04N 7/30, H04N 7/26

(54) **SEGMENTADAPTIVE ZWEIDIMENSIONALE ORTHOGONALE TRANSFORMATIONSKODIERUNG FÜR EIN DIGITALES FERNSEHSYSTEM**
SEGMENT-ADAPTIVE TWO-DIMENSIONAL ORTHOGONAL TRANSFORM CODING FOR A DIGITAL TELEVISION SYSTEM
CODAGE PAR TRANSFORMATION ORTHOGONALE BIDIMENSIONNELLE POUVANT S'ADAPTER AUX SEGMENTS, POUR UN SYSTEME DE TELEVISION NUMERIQUE

(30) Priorität: 14.10.1994 DE 4437827
(43) Veröffentlichungstag der Anmeldung: 30.07.1997
(73) Patentinhaber: ROBERT BOSCH GMBH, 70442 Stuttgart (DE)
(72) Erfinder: SIKORA, Thomas, D-10823 Berlin (DE); MAKAI, Béla, D-13403 Berlin (DE)
(74) Vertreter: Friedmann, Jürgen, Dr.-Ing.
(86) Internationale Anmeldenummer: DE9501467
(87) Internationale Veröffentlichungsnummer: WO9612372

(56) Entgegenhaltungen:
- TENCON '93, Bd. 3/5, 19.Oktober 1993 BEIJING, CHINA, Seiten 402-405, BI MI ET AL. 'Discrete Cosine Transform on Irregular Shape for Image Coding'

## Beschreibung

Die Erfindung bezieht sich auf eine Schaltungsanordnung für ein Fernsehsystem, das mit orthogonalen Basisfunktionen korrelierte Transformationskoeffizienten für transformationskodierte digitale Bilddaten verwendet, die ein darzustellendes Abbild mittels Bildelementen repräsentieren, welche die optische Auflösung und bezüglich ihrer jeweiligen Helligkeit und lokalen Position zueinander willkürliche geometrische Formen bestimmen und zwecks segmentadaptiver zweidimensionaler orthogonaler Transformation in Blöcken variabler Größe organisiert sind.

Im Rahmen der vorliegenden Erfindung sind unter dem Begriff "Fernsehsystem" solche Systeme zu verstehen, die für die Übertragung und Wiedergabe von willkürlich zusammengesetzten Bildern dienen, in denen die örtlichen, den jeweiligen Bildinhalt charakterisierenden Lichtänderungen sich auch mit der Zeit verändern können, z.B. Systeme für die direkte Übertragung oder für die Aufzeichnung und zeitlich und/oder örtlich versetzte Wiedergabe von Szenen. Dabei läßt sich durch die Verwendung von Transformationskodierungen digitaler Bilddaten der benötigte Bandbreitenbedarf erheblich reduzieren.

In der Vergangenheit hat sich, besonders auch bei internationalen Kodierstandards, die zweidimensionale, blockorienterte orthogonale diskrete Kosinustransformation (DCT = discrete cosinus transform) mit außerordentlichem Erfolg durchgesetzt. Aus den in Zeilen und Spalten organisierten Bildpunkten eines Fernsehbildes werden dazu quadratische, vorzugsweise 8 x 8-Blöcke gebildet und in diesen Transformationskoeffizienten bestimmt, die den Bildinhalt des jeweiligen Blocks repräsentieren. In der Mehrzahl derartiger Blöcke eines Fernseh- oder Videobildes unterscheiden sich nur wenige Koeffizienten signifikant von Null, und nur diese Koeffizienten werden für die spätere Rekonstruktion des darzustellenden Abbildes benötigt.

Herkömmliche blockorientierte Bildbeschreibungsmethoden erfüllen hinsichtlich der Adaption an den lokalen Bildinhalt oder einer objektbezogenen Bewegungskompensation nur mäßige Anforderungen. Deshalb befassen sich Untersuchungen und Vorschläge aus jüngster Vergangenheit mit objekt- oder segmentbasierten Kodierungen, die eine konturadaptive Transformation mit Berücksichtigung der Objekt- bzw. Segmentgrenzen ermöglichen.

In den "VLBV 94: Proceedings" (International Workshop on Coding Techniques for Very Low Bit-rate Video), 07. und 08. April 1994, University of Essex, Colchester (GB), Paper # 1.1 -2 Seiten Text; 1 Seite Zeichnung (Blockschaltbild) - ist die Zusammenfassung des Beitrages von H.H. Chen, M.R. Civanlar und B.G. Haskell: " A Block Transform Coder for Arbitrarily - Shaped Image Segments" veröffentlicht, die sich mit sehr schmalbandigen Systemen, z.B. für Bildtelefon mit einer Datenrate von 64 kbit/s, befaßt. Hierbei lassen sich durch eine regionbasierte Bildbeschreibungsmethode sogenannte Blockbildungs- und Moskitoeffekte vermeiden. Die Regionen sind dazu nach sich gleichenden Bewegungsabläufen oder Strukturgrenzen anstatt lediglich für fest vorgegebene rechtwinkelige Blöcke der Signalverarbeitung zu unterziehen. Mit Hilfe eines Iterationsverfahrens werden die jeweils besten Transformationskoeffizienten bestimmt. Der erforderliche Rechenaufwand ist allerdings hoch, weil grundsätzlich eine weit größere Anzahl von Transformationskoeffizienten zu berechnen ist als Bildelemente in den der Signalverarbeitung unterzogenen Regionen vorhanden sind.

Der Stand der Technik, von dem die Erfindung ausgeht, ist zu entnehmen aus: "Signal Processing: Image Communication"., Band 1 (1989), Elsevier Science Publishers B.V., Seiten 153 bis 180: "Coding of arbitrarily shaped image segments based on a generalized orthogonal transform" von M. Gilge, Th. Engelhardt und R. Mehlan. In dieser Veröffentlichung werden sowohl theoretische Untersuchungen zu neuen Algorithmen behandelt, die zur Bilddatenreduktion beliebig geformter Bildregionen benötigt werden, als auch Strukturen für einen Bildkoder und Bilddekoder angegeben. Dabei erfolgt die Signalverarbeitung ohne die Beschränkung auf in quadratischen Blöcken organisierte Bildbereiche. Für beliebig geformte Bildregionen variieren die Segmente innerhalb derartiger Regionen bezüglich der Kontur und/oder der Anzahl der Bildelemente (Pixel) innerhalb der Segmente. Deshalb ist es bei diesem Konzept notwendig, für jedes der vorhandenen unterschiedlichen Segmente einen spezifischen Satz orthogonaler Funktion zu finden (vgl. a.a.O.: Seite 161, rechte Spalte, unten, bis Seite 162, linke Spalte, oben), wobei ein rechteckiger Block als Sonderfall enthalten ist. Die orthogonalen Basisfunktionen sind orthogonal bezüglich der spezifischen geometrischen Formen der Segmente und ermöglichen eine Konturadaption. Insoweit muß allerdings für jedes zu transformierende Abbildsegment eine separate Orthogonalisierung der Basisfunktionen durchgeführt werden, was mit erheblichem Rechenaufwand verbunden ist.

Das technische Problem, welches der Erfindung zugrunde liegt, besteht darin, bei einer segmentadaptiven Bilddatenreduktion eine höhere Kodiereffizienz als bei einer Signalverarbeitung mit reiner Differenz-Puls-Kode-Modulation (difference pulse code modulation = DPCM) zu erzielen, und dabei den Rechenaufwand auf ein mit blockorientierter DCT vergleichbares Maß beschränken zu können.

Die erfindungsgemäße Lösung hierzu sieht eine Schaltungsanordnung gemäß A.1 vor.

Die Aufteilung der zweidimensionalen Transformation in zwei eindimensionale orthogonale Transformationen ermöglicht, die willkürlichen geometrischen Formen zeilen- und spaltenweise separat, d.h. als Reihen der Einheitsbreite 1 mit willkürlichen Längen zu behandeln. Für alle vorkommenden Längen lassen sich fest definierte orthogonale Basisfunktionen als Transformationsmatrizen bereitstellen, die für alle Zeilen und Spalten der Einheitsbreite 1 gelten, so daß für diese unabhängig voneinander und adaptiv bezüglich ihrer Länge und damit der geometrischen Form in der betreffenden Richtung die Transformation als Tabellenoperation stattfinden kann. Die hierfür erforderlichen, vor- und nachbereitenden Signalverarbeitungsoperationen beschränken sich auf einfache und aufwandarme Maßnahmen, wie Sortieren, Verschieben, Transponieren.

Besonders vorteilhafte Ausführungsformen der Erfindung sind in den Unteransprüchen angegeben und werden im Zusammenhang mit der Beschreibung der in den Figuren schematisch dargestellten Einzelheiten näher erläutert. Dabei zeigen:
- Fig. 1:: einen Ablaufplan für eine in zwei eindimensionale Transformationen untergliederte zweidimensionale Transformation digitaler Bilddaten;
- Fig. 2:: ein Blockschaltbild einer Schaltungsanordnung für ein Fernsehsystem gemäß der Erfindung;
- Fig. 3:: ein Schaubild der sich in den einzelnen Stufen einer gemäß Fig. 1 ablaufenden Transformation ergebenden Bilddaten
und
- Fig. 4:: eine Prinzipdarstellung einer Transformationsmatrixtabelle.

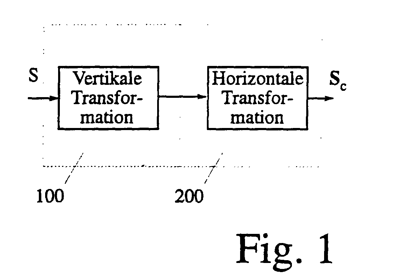

Der in Fig. 1 dargestellte Ablaufplan veranschaulicht in einer schematischen Systemübersicht die Untergliederung einer Schaltungsanordnung für eine zweidimensionale orthogonale Transformation digitaler Bilddaten in zwei Sektionen **100**, **200** für eindimensionale orthogonale Transformation.

Der zu verarbeitende Datensatz **S** eines zweidimensionalen Abbildsegments willkürlicher geometrischer Form besteht aus den digitalen Daten der Bildelemente - oder Pixel - mit deren Luminanz- oder Luminanz/Chrominanzwerten. Dieser Datensatz **S** wird zwecks konturadaptiver Transformation des Abbildsegments in horizontaler und vertikaler Richtung separat bearbeitet. In einer Signalverarbeitungssektion **100** findet zunächst die vertikale Transformation statt. Dabei werden die Abbildsegmentdaten für jede Spalte unabhängig und adaptiv bezüglich der geometrischen Form des Segments durchgeführt. Das Ergebnis dieser ersten eindimensionalen orthogonalen Transformation, d.h. das Zwischenergebnis der zweidimensionalen Transformation, wird in einer zweiten Signalverarbeitungssektion **200** nunmehr in horizontaler Richtung für jede Zeile unabhängig und adaptiv bezüglich der geometrischen Form des Segments ebenfalls als eindimensionale orthogonale Transformation weiterverarbeitet. Das Endergebnis ist ein Datensatz **S**_{**c**}**,** der das Abbildsegment mittels Transformationskoeffizienten repräsentiert. Der Datensatz **S**_{**c**} läßt sich in herkömmlicher Weise kodieren.

Die Signalverarbeitungssektionen **100** und **200** sind in ihrer Reihenfolge austauschbar, es kann also ohne weiteres auch zuerst die horizontale und sodann die vertikale Transformation durchgeführt werden. Weiterhin beinhalten beide Signalverarbeitungssektionen **100, 200** im wesentlichen identische Signalverarbeitungskomponenten.

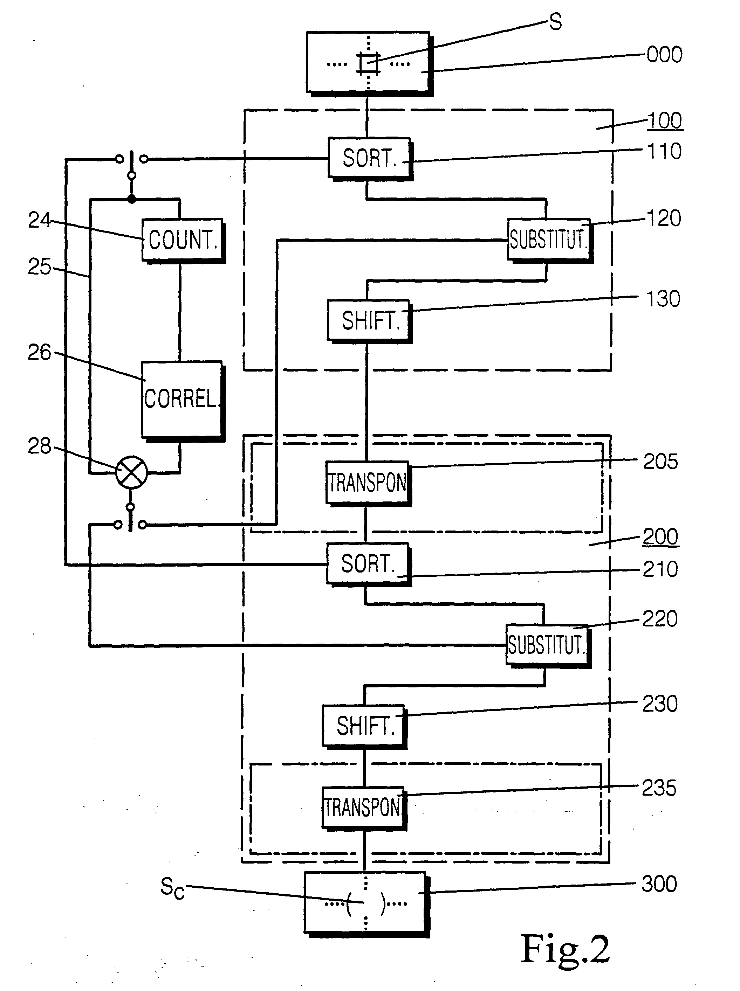

Aus dem in Fig. 2 dargestellten Blockschaltbild einer Schaltungsanordnung für ein Fernsehsystem gemäß der Erfindung ist zu entnehmen, daß jeder Datensatz **S** eines Segments eines Abbildes, das eine Fernsehkamera, ein Bildspeicher, eine Magnetbandkassette oder dgl. liefert und auf einem Bildschirm 000 darstellbar ist, jeweils in einen kodierbaren, aus Transformationskoeffizienten bestehenden Datensatz **S**_{**c**} umgewandelt wird.

In der Signalverarbeitungssektion **100** befindet sich als erste Komponente ein Sortierer **110.** Dieser hat die Aufgabe, vom betreffenden Segment des Abbildes die Kontur, d.h. die äußeren Segmentgrenzen und etwaige Diskontinuitäten zwischen den zum Segment gehörenden Bildelementen zu registrieren und Diskontinuitäten als "Löcher" zu eliminieren. Entsprechend der in Fig. 1 angegebenen Systemübersicht werden derartige Löcher jeder Spalte in vertikaler Richtung über die Segmentgrenze nach außen bzw. die Segmentgrenze entsprechend nach innen verlagert.

Die zweite Komponente dieser Signalverarbeitungssektion **100** bildet ein mit dem Sortierer **110** in Reihe geschalteter Substituierer **120.** Dort wird eine vertikale adaptive eindimensionale Transformation der Segmentspalten durchgeführt, die in einem Ersetzen der Daten der Bildelemente durch das Ergebnis der adaptiven Transformation besteht. Diese Ergebnisse liefern die in einem verzweigten, zwischen Sortierer **110** und Substituierer **120** geschalteten Pfad angeordneten Komponenten, ein Zähler **24,** ein Korrelator **26** und ein Multiplizierer **28** auf folgende Weise.

Die vom Sortierer **100** registrierten Konturdaten des betreffenden von Diskontinuitäten befreiten Segments werden als Vektoren **x** einerseits über eine schlichte Verbindungsleitung **25** dem Multiplizierer **28** und andererseits dem Zähler **24** zugeführt. Der Zähler **24** ermittelt die Anzahl **L** der Bildelemente der betreffenden zu transformierenden Spalte **X** als Anzahl der Komponenten des Vektors **x**. Der jeweilige Wert **L** bildet die Adresse für die Auswahl einer orthogonalen Transformationsmatrix **K(L)** entsprechender Dimension im Korrelator **26.** Alle dort bereitgestellten Transformationsmatrizen sind - wie weiter oben bereits erläutert ist - Sätze fest definierter orthogonaler Basisfunktionen. Die Multiplikation der ausgewählten Transformationsmatrix **K(L)** mit dem Vektor **x** ergibt die Transformationskoeffizienten **x**_{**c**}, mit denen im Substituierer **120** die dort zuvor aus dem Sortierer **110** übernommenen Daten überschrieben werden.

Als dritte Komponente der Reihenschaltung in der Signalverarbeitungssektion **100** liegt hinter dem Sortierer **110** und dem Substituierer **120** ein Positionsschieber **130**. Hier findet eine Verschiebung aller Segmentspalten mit dem Ziel statt, für die nachfolgende horizontale Transformation eine vorteilhafte Zuordnung der Segmentelemente zu erhalten. Der Richtungssinn und der Umfang dieser Verschiebungen ist von der Funktionsweise der weiteren Signalverarbeitungsschritte abhängig, wobei die Positionen der verschobenen Elemente zueinander die Transformationseigenschaften je nach Anwendung bedeutend beeinflussen können.

In der zweiten Signalverarbeitungssektion **200** findet nunmehr die horizontale adaptive Transformation auf im wesentlichen identische Art und Weise wie die vertikale adaptive Transformation in der ersten Signalverarbeitungssektion **100** statt. In diesem Zusammenhang ist in Fig. 2 eine besonders vorteilhafte Ausführungsform der Erfindung dargestellt, bei der für beide Signalverarbeitungssektionen **100, 200** ein gemeinsamer, sequentiell umschaltbarer verzweigter Pfad mit dem Zähler **24,** dem Korrelator **26,** der schlichten Verbindungsleitung **25** und dem Multiplizierer **28** vorgesehen und die für die orthogonale Transformation der zweiten Dimension zuständige Signalverarbeitungssektion **200** an beiden Enden jeweils mit einem Transponierer **205, 235** ausgerüstet ist.

Da die zweite Signalverarbeitungssektion **200** als Ausgangsdaten das von der ersten Signalverarbeitungssektion **100** gelieferte Zwischenergebnis benötigt, beide Sektionen **100, 200** also seriell arbeiten, kann auf jeden Fall dieser verzweigte Pfad gemeinsam von beiden Sektionen **100, 200** genutzt werden. Möglich ist auch, darüber hinaus Sortierer **110,** Substituierer **120** und Positionsschieber **130** für die zweite Sektion **200** zu verwenden, doch ist dann ein Zwischenspeicher an der Schnittstelle der beiden Sektionen **100, 200** erforderlich.

Die in Fig. 2 als Blockschaltbild dargestellte Ausführungsform der Erfindung hat jedoch ein weiteres Merkmal der Erfindung zum Gegenstand. Die Transponierer **205, 235** bewirken jeweils eine geometrische Spiegelung des Segments an der Diagonalen, so daß die horizontale adaptive Transformation der Zeilen als Spalten durchzuführen ist. Die von den Komponenten: Sortierer **110, 210;** Substituierer **120, 220;** Positionsschieber **130, 230** gelieferten Ergebnisse unterscheiden sich für Abbildsegmente willkürlicher geometrischer Formen; davon bleibt jedoch die jeweils grundsätzlich identische Funktionsweise und der jeweils identische Aufbau dieser Komponenten unberührt.

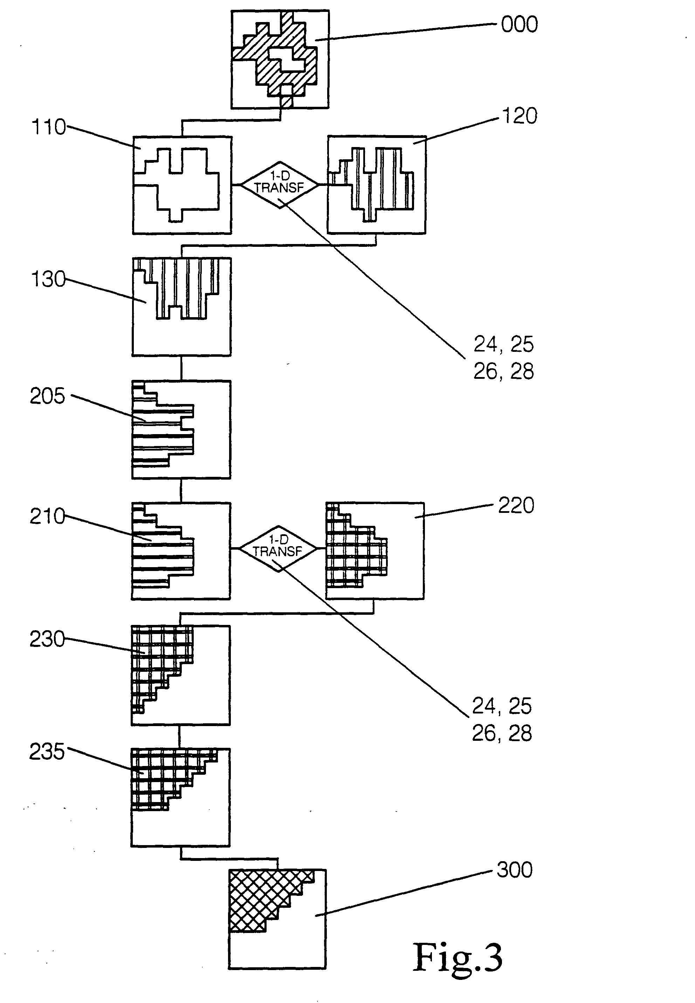

Die Fig. 3 zeigt in einem Schaubild die einzelnen Erscheinungsformen, in denen die Komponenten der Schaltungsanordnung gemäß Fig. 1 und insbesondere Fig. 2 ihre Ergebnisse liefern. In Fig. 3 sind diese Erscheinungsformen mit denselben Bezugsziffern versehen wie die in Fig. 2 gezeigten, die betreffenden Ergebnisse liefernden Komponenten der Schaltungsanordnung.

Ein Abbildsegment **000**, in dem - entsprechend einer bevorzugten Ausführungsform der Erfindung - die dem Segment angehörenden Bildelemente in quadratischen Blöcken organisiert sind, hat beispielsweise die durch schräg schraffierte Bildelemente angegebene geometrische Form oder Kontur. Zur Vorbereitung der eindimensionalen orthogonalen Transformation der Spalten des Abbildsegments sind vom Sortierer **110** die als Löcher im Abbildsegment **000** in Erscheinung tretenden Diskontinuitäten eliminiert worden. Die als 1-D TRANSF. zusammengefaßten Schaltungskomponenten: Zähler **24,** Verbindungsleitung **25,** Korrelator **26** und Multiplizierer **28** liefern die Transformationskoeffizienten, mit denen die Bilddaten der Bildelemente im Substituierer **120** als Zwischenergebnis überschrieben werden. Diese Substitution ist durch die vertikalen Strichpaare in den einzelnen Spalten des Abbildsegments mit der sortierten Struktur veranschaulicht.

Der Positionsschieber **130** ordnet die einzelnen Segmentspalten in vorteilhafter Weise, hier einander derart zu, daß alle Spalten an die obere horizontale Blockgrenze gerückt werden. Der Transponierer **205** spiegelt diesen Datensatz, d.h. die obere horizontale Blockgrenze erscheint nunmehr als die linke vertikale Blockgrenze und die bisherigen Spalten erscheinen nunmehr als Zeilen des Segments.

Der Sortierer **210** ordnet diese Zeilen so um, daß z.B. die längsten Zeilen im mittleren Bereich des Blockes und die kürzeren jeweils den Blockgrenzen näher liegen. Diese Organisation vermeidet ein Hin- und Herspringen zwischen den einzelnen Adressen bei der Auswahl der betreffenden fest definierten orthogonalen Basisfunktionen. Die als zweite 1-D TRANSF. angegebene Zusammenfassung der Komponenten: Zähler **24,** Verbindungsleitung **25,** Korrelator **26** und Multiplizierer **28** liefert die Transformationskoeffizienten der zweiten eindimensionalen Transformation, mit denen im Substituierer **220** die als Zwischenergebnis vorliegenden Daten erneut überschrieben werden. Diese Substitution ist durch die sich nunmehr senkrecht zueinander verlaufenden Strichpaare veranschaulicht.

Der Positionsschieber **230** ordnet das jetzt zweidimensionale orthogonale Transformationskoeffizienten aufweisende Erscheinungsbild des konturadaptiven transformierten Abbildsegments hinsichtlich der - im Rahmen der vorliegenden Erfindung nicht näher zu erläuternden- nachfolgenden Kodierung um. Dabei wird allgemein angestrebt, alle zu kodierenden Elemente in einem Dreieck mit einem rechten Winkel in der linken oberen Ecke des Blocks angenähert zur Verfügung zu stellen.

Der Transponierer **235** spiegelt dieses "Dreieck", um im Block wieder die Spalten vertikal und die Zeilen horizontal verlaufend bereitzustellen, so daß schließlich die eigentliche Kodierung der digitalen Bilddaten der das Abbildsegment **000** repräsentierenden Bildelemente- hier durch sich kreuzende 45°-Linien veranschaulicht- durchgeführt werden kann.

Alle zuvor erläuterten Einzelheiten gelten sowohl bezüglich der Luminanz als auch der Chrominanz von Fernsehsignalen oder dgl.. Für Farbfernsehsignale können sowohl drei parallele Strecken von Signalverarbeitungssektionen **100, 200** gemäß der Erfindung, in besonders vorteilhafter Weise aber auch zumindest separate Substituierer **120.n, 220.n** und Korrelatoren **26.n -** mit n = 1, 2, 3 - vorgesehen sein. Der Grad der sequentiellen Mehrfachnutzung einzelner Komponenten der Schaltungsanordnung ist abhängig vom Zeitversatz, der zwischen Aufnahme und Wiedergabe zur Verfügung steht.

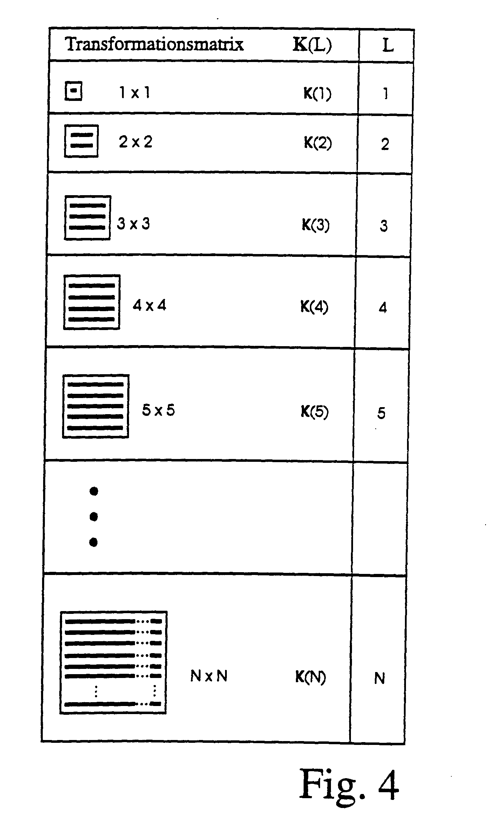

Die in Fig. 4 dargestellte Transformationsmatrixtabelle verdeutlicht einen für die Erfindung maßgeblichen Vorzug gegenüber bislang bekannten, konturadaptiven Transformationsmethoden. Eine einmal definierte Tabelle mit spezifischen Transformationsmatrizen kann gegebenenfalls für eine große Anzahl von Anwendungen benutzt werden, ohne daß für jede Segmentgeometrie spezifische Basisfunktionen berechnet (orthogonalisiert) werden müssen. Während der Signalverarbeitung sind hinsichtlich der Bestimmung der zu verwendenden Transformationskoeffizienten entweder lediglich Tabellenoperationen oder allenfalls wenig aufwendige Berechnungen durchzuführen. Werden Transformationsmatrizen **K(L)** verwendet, die - ausgehend von Basisfunktionen der DCT- definiert werden, können orthogonale DCT-Transformationsmatrizen unterschiedlicher Dimension **N** zugrunde gelegt werden, die eine segmentadaptive DCT beliebig geformter Bildsegmente ermöglicht. In Abhängigkeit der Länge **L** eines Spaltenvektors **x** wird in der Tabelle eine quadratische Transformationsmatrix **K(L)** mit L Spalten und L Zeilen ausgewählt. Die Zeilen der Matrix **K(L)** bestehen aus zueinander orthogonalen Basisfunktionen.

In den vorstehenden Erläuterungen ist, wenn auch noch nicht ausdrücklich erwähnt, vorausgesetzt, daß Sortierer **110, 210** sowie Positionsschieber **130, 230** beim Registrieren der Verschiebungen und Verlagerungen von Bildelementen die zugehörigen Informationen für die Rekonstruktion des Bildes auf der Wiedergabeseite bereitstellen. Diese Informationen sind also in die aufzuzeichnenden bzw. zu übertragenden transformationskodierten digitalen Bilddaten zu integrieren und erfordern geringfügige zusätzliche Bandbreite.

Die Rekonstruktion darzustellender Abbilder aus transformationskodierten digitalen Bilddaten kann bezüglich der zweidimensionalen orthogonalen Transformation entsprechend der technischen Lehre der Erfindung auf besonders vorteilhafte Weise dadurch bewerkstelligt werden, daß für eine Signalverarbeitung in inverser Richtung von der Reihenschaltung der Signalverarbeitungssektionen **100, 200** sowie von verzweigten Pfaden mit Zahlern **24** und den fest definierte orthogonale Basisfunktionen als Transformationsmatrizen bereitstellenden Korrelatoren **26** als Reihenschaltung in einem Zweig, schlichten Verbindungsleitungen **25** im anderen Zweig und Multiplizierern **28** im Verzweigungspunkt die Eingänge und Ausgänge vertauscht und alle angegebenen Signalverarbeitungskomponenten für inversen Betrieb ausgelegt sind und die Korrelatoren **26** die fest definierten, mit den für die Vorwärtstransformation identischen orthogonalen Basisfunktionen als Transformationsmatrizen gespiegelt bereitstellen.

Ausgehend von den Koeffizienten der Vorwärtsformation -vgl. Fig. 1 bis 4 und zugehörige Erläuterungen -, den Informationen über die Kontur der jeweiligen geometrischen Form des Segments, d.h. den dort anwendungsspezifisch auf der Aufnahme/Sendeseite vorgenommenen Sortier- und Verschiebeoperation, lassen sich auf der Wiedergabe/Empfängerseite die Grauwerte eines Schwarz/Weiß-Fernsehbildes bzw. die Farbparameter eines Farbfernsehbildes perfekt rekonstruieren.

## Patentansprüche

1. Schaltungsanordnung für ein Fernsehsystem, das mit orthogonalen Basisfunktionen korrelierte Transformationskoeffizienten für transformationskodierte digitale Bilddaten verwendet, die ein darzustellendes Abbild mittels Bildelementen repräsentieren, welche die optische Auflösung und bezüglich ihrer jeweiligen Helligkeit und lokalen Position zueinander willkürliche geometrische Formen bestimmen und zwecks segmentadaptiver zweidimensionaler orthogonaler Transformation in Blöcken variabler Größe organisiert sind, mit folgenden Merkmalen:
es sind zwei in Reihe geschaltete Signalverarbeitungssektionen (100, 200) für jeweils eindimensionale orthogonale Transformationen vorgesehen, die jeweils eine Reihenschaltung aus: a): einem Sortierer (110, 21) und b): einem Substituierer (120, 220) sowie dazu parallel einen verzweigten Pfad mit einem Zähler (24) und einem fest definierte orthogonale Basisfunktionen als Transformationsmatrizen bereitstellenden Korrelator (26) als Reihenschaltung in einem Zweig, einer schlichten Verbindungsleitung (25) im anderen Zweig und einem Multiplizierer (28) im Verzweigungspunkt, und c): einem Positionsschieber (130, 230) aufweisen, wobei der Sortierer (100, 200) jeweils die Konturdaten des betreffenden von Diskontinuitäten befreiten Segments registriert und diese einerseits an den Multiplizierer (28) und andererseits an den Zähler (24) weitergibt, wobei der Zähler (24) die Anzahl (L) der Bildelemente für die jeweils eindimensionale orthogonale Transformation ermittelt und aus dieser Anzahl (L) die Adresse für die Auswahl einer orthogonalen Transformationsmatrix (K(L)) entsprechender Dimension im Korrelator (26) bildet, wobei die mittels dem Multiplizierer (28) ausgeführte Multiplikation der ausgewählten orthogonalen Transformationsmatrix (K(L)) mit den vom Sortierer (110, 21) registrierten Konturdaten Transformationskoeffizienten (Xc) ergeben, mit denen im Substituierer (120, 220) die dort zuvor aus dem Sortierer (110, 210) übernommenen Daten überschrieben werden, und wobei der Positionsschieber (130, 230) hinter dem entsprechenden Substituierer (120, 220) vorgesehen ist zur Verschiebung der Segmentzeilen bzw. - Spalten für die nachfolgende Transformation in der jeweils anderen orthogonalen Richtung.

2. Schaltungsanordnung nach Anspruch 1,
**dadurch gekennzeichnet, daß** für beide Signalverarbeitungssektionen (100, 200) ein gemeinsamer, sequentiell umschaltbarer verzweigter Pfad mit dem Zähler (24), dem Korrelator (26), der schlichten Verbindungsleitung (25) und dem Multiplizierer (28) vorgesehen und die für die orthogonale Transformation der zweiten Dimension zuständige Signalverarbeitungssektion (200) an beiden Enden jeweils mit einem Transponierer (205, 235) ausgerüstet ist.

3. Schaltungsanordnung nach Anspruch 1 oder 2,
**dadurch gekennzeichnet, daß** alle angegebenen Signalverarbeitungskomponenten auf eine Organisation der Bildelemente in quadratischen Blöcken ausgelegt sind.

4. Schaltungsanordnung nach einem der Ansprüche 1 bis 3,
**dadurch gekennzeichnet, daß** für die Verarbeitung von Luminanz- und Chrominanzdaten der Bildelemente zumindest separate. Substituierer (120.n, 220.n) und Korrelatoren (26.n) - mit n = 1; 2; 3 - vorgesehen sind.

5. Schaltungsanordnung nach einem der Ansprüche 1 bis 4,
**dadurch gekennzeichnet, daß** für eine Signalverarbeitung in inverser Richtung von der Reihenschaltung der Signalverarbeitungssektionen (100, 200) sowie von verzweigten Pfaden mit Zählern (24) und den fest definierte orthogonale Basisfunktionen als Transformationsmatrizen bereitstellenden Korrelatoren (26) als Reihenschaltung in einem Zweig, schlichten Verbindungsleitungen (25) im anderen Zweig und Multiplizierern (28) im Verzweigungspunkt die Eingänge und Ausgänge vertauscht und alle angegebenen Signalverarbeitungskomponenten für inversen Betrieb ausgelegt sind und die Korrelatoren (26) die fest definierten, mit den für die Vorwärtstransformation identischen orthogonalen Basisfunktionen als Transformationsmatrizen gespiegelt bereitstellen.

## Claims

1. Circuit arrangement for a television system which uses transform coefficients correlated with orthogonal basis functions for transform-coded digital picture data which represent an image to be displayed by means of pixels which determine the optical resolution and, with regard to their respective brightness and local position, mutually arbitrary geometrical shapes and are organized in blocks of variable size for the purpose of segment-adaptive two-dimensional orthogonal transformation, having the following features:
provision is made of two series-connected signal processing sections (100, 200) for respective one-dimensional orthogonal transforms, which each have a series circuit comprising: a): a sorter (110, 210) and b) : a substitutor (120, 220) and, in parallel therewith, a branched path having a counter (24) and a correlator (26), which provides fixedly defined orthogonal basis functions as transform matrices, as a series circuit in one branch, a simple connecting line (25) in the other branch and a multiplier (28) in the branch point, and c): a position shifter (130, 230), the sorter (100, 200) in each case registering the contour data of the relevant segment which is freed of discontinuities and forwarding these data to the multiplier (28), on the one hand, and to the counter (24), on the other hand, the counter (24) determining the number (L) of pixels for the respective one-dimensional orthogonal transform and, from this number (L) forming the address for the selection of an orthogonal transform matrix (K(L)) of corresponding dimension in the correlator (26), the multiplication - performed by means of the multiplier (28) - of the selected orthogonal transform matrix (K(L)) by the contour data registered by the sorter (110, 210) producing transform coefficients (Xc) with which the data previously accepted in the substitutor (120, 220) from the sorter (110, 210) are overwritten in the said substitutor, and the position shifter (130, 230) being provided downstream of the corresponding substitutor (120, 220) for the purpose of shifting the segment rows and/or columns for the subsequent transform in the respective other orthogonal direction.

2. Circuit arrangement according to Claim 1,
**characterized in that** a common branched path having the counter (24), the correlator (26), the simple connecting line (25), and the multiplier (28) is provided for both signal processing sections (100, 200), which path can be switched over sequentially, and the signal processing section (200) which is responsible for the orthogonal transform of the second dimension is equipped with a respective transposer (205, 235) at both ends.

3. Circuit arrangement according to Claim 1 or 2,
**characterized in that** all the signal processing components specified are designed for organization of the pixels in square blocks.

4. Circuit arrangement according to one of Claims 1 to 3,
**characterized in that** at least separate substitutors (120.n, 220.n) and correlators (26.n) - were n = 1; 2; 3 - are provided for processing luminance and chrominance data of the pixels.

5. Circuit arrangement according to one of Claims 1 to 4,
**characterized in that** for signal processing in the inverse direction of the series circuit of the signal processing sections (100, 200) and of branched paths having counters (24) and the correlators (26), which provide fixedly defined orthogonal basis functions as transform matrices, as a series circuit in one branch, simple connection lines (25) in the other branch and multipliers (28) in the branch point, the inputs and outputs are interchanged and all the signal processing components specified are designed for inverse operation and the correlators (26) provide the fixedly defined orthogonal basis functions, identical to those for the forward transform, as transform matrices in mirrored fashion.

## Revendications

1. Circuit pour système de télévision, utilisant des coefficients de transformation corrélés avec des fonctions de base orthogonales pour un codage par transformation de données numériques d'image constituant une image à représenter à l'aide d'éléments d'image qui définissent la résolution optique, la luminosité et la position locale respective de formes géométriques arbitraires, et qui sont organisés en blocs de taille variable pour une transformation orthogonale bidimensionnelle adaptative par segment,
**caractérisé en ce qu'**il comprend :
• deux sections de traitement de signal (100, 200) en série, prévues chacune pour des transformations orthogonales unidimensionnelles,
• chaque section se composant du montage en série de :
a) un classeur (110, 210),
b) un substitueur (120, 220), avec en parallèle une branche de dérivation comprenant un compteur (24) et un corrélateur (26) fournissant des matrices de transformation avec des fonctions de base orthogonales définies de manière fixe, comme montage en série dans une branche, une simple ligne de liaison (25) dans l'autre branche et un multiplicateur (28) au point de dérivation, et
c) un décaleur de position (130, 230), le classeur (100, 200) enregistrant chaque fois les données de contour du segment dont on a éliminé les discontinuités et les fournissant d'une part au multiplicateur (28) et d'autre part au compteur (24),
• le compteur (24) déterminant le nombre (L) d'éléments d'image pour la transformation orthogonale unidimensionnelle respective et, à partir du nombre (L), formant l'adresse pour la sélection d'une matrice de transformation orthogonale (K(L)) de dimensions correspondantes dans le corrélateur (26),
• la multiplication effectuée par le multiplicateur (28) de la matrice de transformation orthogonale sélectionnée (K(L)) avec des données de contour enregistrées par le classeur (110, 210), fournissant des coefficients de transformation (Xc) qui remplacent dans le substitueur (120, 220), les données qu'il a reçues précédemment du classeur (110, 210), et
• le décaleur de position (130, 230) étant prévu en aval du substitueur (120, 220) pour décaler les lignes ou colonnes de segments pour la transformation suivante dans l'autre direction orthogonale.

2. Circuit selon la revendication 1,
**caractérisé en ce que**
pour chacune des deux sections de traitement de signal (100, 200), on a un chemin de dérivation commun, commutable séquentiellement, et comprenant le compteur (24), le corrélateur (26), la simple ligne de liaison (25) et le multiplicateur (28), et la section de traitement de signal (200) responsable de la transformation orthogonale dans la seconde dimension, a chaque fois un transposeur (205, 235) aux deux extrémités.

3. Circuit selon l'une des revendications 1 ou 2,
**caractérisé en ce que**
tous les composants de traitement de signal sont conçus pour organiser les éléments d'images en blocs carrés.

4. Circuit selon l'une quelconque des revendications 1 à 3,
**caractérisé en ce que**
pour le traitement des données de luminance et de chrominance des éléments d'image, on a au moins des substitueurs distincts (120.n, 220.n) et des corrélateurs distincts (26.n), avec n = 1, 2, 3.

5. Circuit selon l'une quelconque des revendications 1 à 4,
**caractérisé en ce que**
pour un traitement de signal en sens inverse du montage en série des sections de traitement de signal (100, 200) et des chemins de dérivation comprenant les compteurs (24) et les corrélateurs (26) fournissant les matrices de transformation comme fonctions de base orthogonales définies de manière fixe, sous la forme d'un montage en série dans une branche, avec les simples lignes de liaison (25) dans l'autre branche ainsi que les multiplicateurs (28) au point de combinaison, on échange les entrées et les données et on conçoit tous les composants de traitement de signal ainsi indiqués pour fonctionner en sens inverse, tandis que les corrélateurs (26) qui donnent les fonctions de base orthogonales définies de manière fixe, sont des matrices de transformation symétriques de celles assurant la transformation directe.
